Europäisches Patentamt

(19) European Patent Office

Office européen des brevets

(11) Numéro de publication : **0 313 459 B1**

(12) **FASCICULE DE BREVET EUROPEEN**

(45) Date de publication du fascicule du brevet :
24.07.91 Bulletin 91/30

(51) Int. Cl.⁵ : **G01V 1/00**

(21) Numéro de dépôt : **88402635.2**

(22) Date de dépôt : **19.10.88**

(54) **Procédé d'acquisition de données sismiques et dispositif de mise en oeuvre du procédé.**

(30) Priorité : 20.10.87 FR 8714437

(43) Date de publication de la demande :
26.04.89 Bulletin 89/17

(45) Mention de la délivrance du brevet :
24.07.91 Bulletin 91/30

(84) Etats contractants désignés :
AT BE CH DE ES FR GB GR IT LI LU NL SE

(56) Documents cités :
FR-A- 2 145 552
FR-A- 2 279 115
US-A- 3 351 899

(73) Titulaire : **COMPAGNIE GENERALE DE GEOPHYSIQUE**
**1, Rue Léon Migaux**
**F-91341 Massy Cédex (FR)**

(72) Inventeur : **Garotta, Robert Jean**
**5, Allée Malézieux**
**F-92290 Chatenay Malabry (FR)**

(74) Mandataire : **Martin, Jean-Jacques et al**
**Cabinet REGIMBEAU 26, Avenue Kléber**
**F-75116 Paris (FR)**

## Description

L'invention concerne un procédé d'acquisition de données sismiques et un dispositif de mise en oeuvre de ce procédé.

Actuellement, l'acquisition de données sismiques dans une zone de prospection est effectuée à partir d'un réseau de récepteurs disposés à l'aplomb de la surface terrestre dans la zone de prospection. Une série de tirs engendrant des vibrations d'excitation, désignées ci-après par vibrations, est effectuée, les vibrations engendrées se propageant vers les couches terrestres sous-jacentes et se réfléchissant sur celles-ci. Habituellement, une source unique présentant un spectre de fréquence d'émission vibratoire couvrant le domaine des signaux utiles est utilisée, soit un domaine ou bande de fréquence compris entre 10 Hz et 60 Hz.

Pour un réseau R monoligne tel que représenté en figure 1a, dans lequel les géophones ou groupes de géophones G1, G2 sont espacés d'une distance e, la source S à bande de fréquence unique est placée au centre du réseau R et la distance maximale du géophone d'extrémité connue sous le nom en vocable anglo-saxon de "remote-on" est désignée par L.

Le diagramme des échos de vibrations réfléchis par les couches terrestres sous-jacentes, diagramme temps-distance, tel que représenté en figure 1a, représentatif de la vitesse de propagation de groupe des vibrations réfléchies présente, pour les géophones ou groupes de géophones disposés au voisinage de la source S et en raison du phénomène de saturation aux composantes basse fréquence de ces derniers, une perturbation due aux ondes lentes, correspondant aux vibrations de vitesse de propagation faibles et donc de forte inclinaison sur le diagramme de la figure 1a. Cette perturbation a pour effet de masquer et de brouiller par un bruit basse fréquence, la réponse aux composantes haute fréquence des vibrations des géophones ou groupes de géophones situés au voisinage de la source S, ces composantes haute fréquence présentant une inclinaison beaucoup plus faible dans le diagramme de la figure 1a.

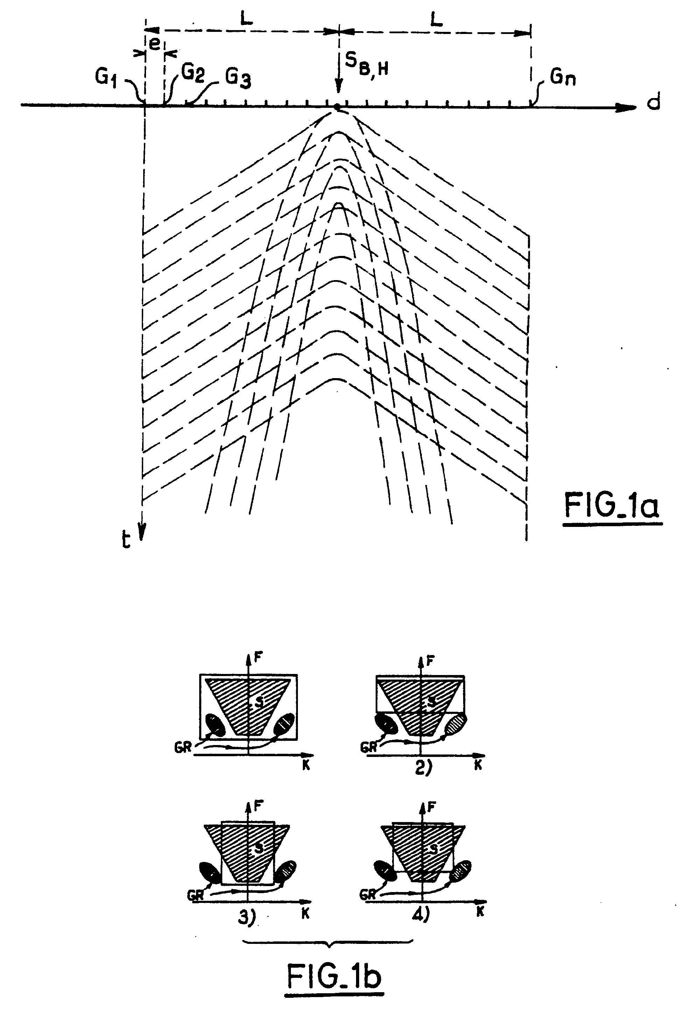

Une représentation avantageuse, selon la figure 1b, des niveaux relatifs des signaux de bruit basse fréquence et du signal utile S dans un espace fréquence temporelle du spectre des vibrations émises-fréquence spatiale ou nombre d'onde spatiale K et résolution spatiale du réseau permet de montrer que le niveau de bruit basse fréquence noté GR correspond à un niveau relatif maximum de signal compris entre 0 dB et −5 dB dans les domaines F, K(GR) correspondants alors que le niveau correspondant dans le domaine F, K(S) correspondant, sensiblement en forme de trapèze, correspond à un niveau relatif correspondant compris entre −10 db et −30 dB. L'inclusion du signal de bruit dans un domaine de traitement correspondant au rectangle de la figure 1b1 pose donc le problème précité en liaison avec la figure 1a.

Une première solution à ce problème peut consister à effectuer un filtrage de fréquence temporelle des signaux reçus par les géophones en réponse aux vibrations, ainsi que représenté par le domaine rectangulaire réduit de la figure 1b2. Cette solution, bien que permettant de conserver la résolution spatiale maximale pour les signaux à fréquence haute, présente cependant l'inconvénient d'une réponse limitée en fréquence temporelle avec une perte d'information correspondante.

Une autre solution à ce problème peut consister ainsi que représenté en figure 1b3 à conserver la totalité des composantes de fréquence temporelle des signaux reçus par les géophones en réponse aux vibrations. Mais ceci ne peut être obtenu qu'au prix d'une diminution de résolution en distance du réseau correspondant à la limite inférieure en nombre d'onde spatiale du domaine de bruit GR.

Une solution intermédiaire peut, ainsi que représenté en figure 1b4, consister à limiter à la fois la bande de fréquence des composantes spectrales du signal utile et la résolution spatiale du réseau. Cependant, cette solution conduit également à une perte d'information globale des signaux d'échos.

L'invention a pour but de remédier aux inconvénients précités par la mise en oeuvre d'un procédé permettant de conserver à la fois la bande de fréquence des composantes des vibrations et de permettre cependant d'augmenter la résolution spatiale du réseau de récepteurs.

Un autre objet de la présente invention est la mise en oeuvre d'un procédé aux performances en résolution spatiale améliorées pour une utilisation d'une même quantité de matériel que dans les procédés de l'art antérieur.

Un autre objet de la présente invention compte tenu de l'utilisation d'un même matériel d'émission-réception que dans les procédés de l'art antérieur, est la mise en oeuvre de conditions opératoires semblables du point de vue de l'effort de vibration appliqué et de la quantité d'information recueillie par trace.

Le procédé d'acquisition de données sismiques dans une zone de prospection, objet de l'invention, est remarquable en ce qu'il consiste, pour l'acquisition d'une trace, à disposer à l'aplomb de la surface terrestre, dans la zone de prospection, un réseau de récepteurs de vibrations, à disposer au voisinage du réseau une pluralité de sources de vibrations, chacune desdites sources étant susceptible d'émettre une vibration dont le spectre de fréquence est compris dans une bande de fréquence déterminée, les bandes de fréquence des spectres de chaque source étant adjacentes et permettant de couvrir la bande de fréquence des signaux utiles des données sismiques, à émettre à partir de la pluralité de sources des vibrations à spectre de fréquence différent, à enregistrer, au moyen desdits récepteurs lesdites vibrations réfléchies par les couches sous-jacentes de la surface terrestre, à déplacer d'un incrément de déplacement de trace lesdites sources par rapport au réseau dans la direction d'acquisition, à répéter les étapes d'émission, d'enregistrement et de déplacement pour une pluralité de déplacements d'un incrément de trace successifs.

Le dispositif d'acquisition de données sismiques pour prospection géophysique objet de l'invention est remarquable en ce qu'il comporte, disposés à l'aplomb de la surface terrestre, dans la zone de prospection, un réseau de récepteurs de vibrations, une pluralité de sources de vibrations chacune desdites sources étant susceptible d'émettre une vibration dont le spectre de fréquence est compris dans une bande de fréquence déterminée, les bandes de fréquence de chaque source étant adjacentes et permettant de couvrir la bande de fréquence des signaux utiles des données sismiques.

Le procédé et le dispositif objets de l'invention trouvent application à la prospection géophysique, terrestre ou marine, pour des relevés bidimensionnels ou tridimensionnels, monolignes ou multilignes, monosource ou multisource.

L'invention sera mieux comprise à la lecture de la description et à l'observation des dessins ci-après, dans lesquels outre les figures 1a et 1b relatives à l'art antérieur :

— la figure 2 représente un schéma illustratif des différentes étapes du procédé objet de l'invention,

— la figure 3 représente un diagramme d'acquisition bidimensionnelle d'une trace conformément à un mode de réalisation particulier objet de l'invention,

— la figure 4a représente un schéma illustratif du procédé objet de l'invention dans le cas d'une acquisition bidimensionnelle multiligne,

— la figure 4b représente un schéma illustratif du procédé objet de l'invention, dans le cas d'une acquisition bidimensionnelle multisource,

— la figure 4c représente un schéma illustratif du procédé objet de l'invention dans le cas d'une acquisition tridimensionnelle,

— la figure 5 représente un schéma général d'un dispositif d'acquisition de données sismiques, conformément au procédé objet de l'invention

— les figures 6a et 6b représentent des formes d'ondes des signaux de commande de la première, respectivement deuxième source de façon à engendrer des vibrations présentant respectivement un spectre de fréquence compris dans une bande de fréquence haute et dans une bande de fréquence basse, lorsque les sources sont constituées par un vibreur,

— les figures 7 et 8 représentent un exemple non limitatif de traitement des données acquises.

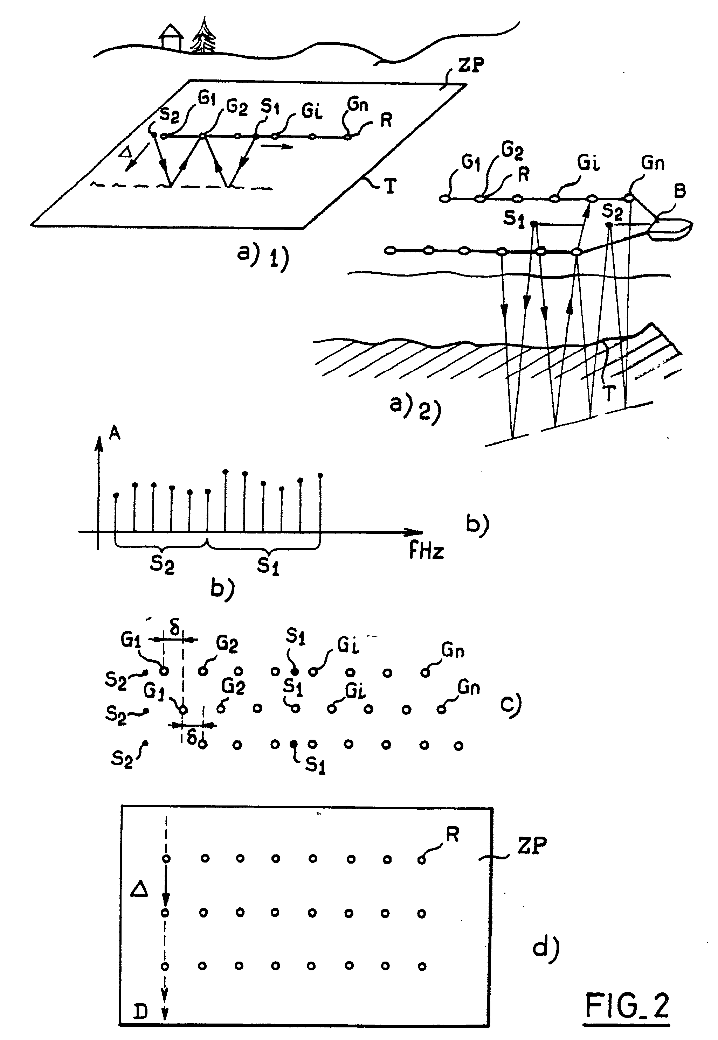

Le procédé d'acquisition de données sismiques objet de l'invention, sera tout d'abord décrit, de manière générale, en liaison avec la figure 2.

Conformément à la figure précitée, le procédé objet de l'invention consiste, pour l'acquisition d'une trace, à disposer à l'aplomb de la surface terrestre notée T sur la figure 2 au point a1 et a2, dans la zone de prospection notée ZP, un réseau noté R de récepteurs de vibrations.

Bien entendu, par surface terrestre, ainsi que représenté en figure 2a au point 1, on entend, soit le sol, le réseau R étant disposé à même le sol dans la zone de prospection ZP, soit, ainsi que représenté en figure 2a au point 2, un réseau de récepteurs de vibrations flottant à la surface d'une étendue marine par exemple, le réseau étant remorqué par un bateau B, et la surface terrestre étant constituée par le fond marin. Le procédé objet de l'invention s'applique, bien entendu, à l'acquisition de données géophysiques en sismique terrestre ou marine.

Ainsi qu'on l'a également représenté en figure 2a, au point 1 et 2, le procédé objet de l'invention consiste en outre à disposer au voisinage du réseau R une pluralité de source de vibrations. Chaque source est susceptible d'émettre une vibration dont le spectre de fréquence est compris dans une bande de fréquence déterminée. Les bandes de fréquence des spectres de chaque source sont sensiblement adjacentes et permettent de couvrir la bande de fréquence des signaux utiles des données sismiques. Sur la figure 2 au point 2a1 et 2a2, on a représenté la présence de deux sources, mais il est bien entendu que le procédé objet de l'invention peut être mis en oeuvre par l'utilisation d'un nombre plus important de sources.

Sur la figure 2b, on a représenté le spectre de fréquence d'une première source considérée comme une source émettant des vibrations dont le spectre de fréquence est compris dans une bande de fréquence haute, et une deuxième source considérée comme émettant des vibrations avec un spectre de fréquence compris dans une bande de fréquence basse. Le diagramme de la figure 2b est un diagramme représentatif des composantes spectrales des vibrations en amplitude et en fréquence. Par bandes de fréquence adjacentes des spectres de chaque source, on entend bien entendu, des bandes de fréquence dont le recouvrement en fréquence ne présente pas plus de 10% de la largeur de bande de chacune des bandes de fréquence considérée.

Conformément au procédé objet de l'invention, celui-ci consiste ensuite à émettre à partir de la pluralité de sources notées S1, S2 sur la figure 2a1, des vibrations à spectre de fréquence différent, puis à enregistrer au moyen des récepteurs notés G1, G2, Gi, Gn, les vibrations réfléchies par les couches sous-jacentes de la surface terrestre T.

Les étapes précédentes ayant été effectuées pour une position relative des sources précitées par rapport au réseau R, un déplacement relatif des sources et du réseau est réalisé dans la direction d'acquisition du profil, laquelle est matérialisée par l'alignement des sources du réseau R. Ainsi que représenté en figure 2c, les sources sont ainsi déplacées par rapport au réseau R d'un incrément de déplacement noté δ dans la direction d'alignement des récepteurs G1, Gi, Gn, de façon à réaliser, pour une pluralité de déplacements successifs d'un incrément de déplacement, une figure d'émission telle que représentée en figure 2c. Sur la figure 2c, on a représenté le seul déplacement relatif des sources par rapport au réseau R dans trois déplacements d'incrément δ successifs.

Bien entendu, les étapes consistant à émettre à partir de la pluralité de sources des vibrations à spectre de fréquence différent, puis à enregistrer au moyen des récepteurs G1, G2, Gi, Gn les vibrations réfléchies par les couches sous-jacentes de la surface terrestre, et enfin à déplacer d'un incrément de déplacement de trace les sources par rapport au réseau R dans la direction d'acquisition du profil, sont répétées pour une pluralité de déplacements δ d'un incrément de déplacements successifs.

Selon une caractéristique avantageuse du procédé objet de l'invention, l'émission des vibrations à spectre de fréquence différent à partir de la pluralité de sources S1 et S2 par exemple, est effectuée en synchronisme.

Bien entendu, afin de couvrir tout ou partie de la zone de prospection ZP, le procédé objet de l'invention consiste également, ainsi que représenté en figure 2d, à déplacer le réseau R et les sources d'un incrément de déplacement Δ dans la direction de progression D. Suite à chaque déplacement d'un incrément de déplacement Δ dans la direction de progression D, le réseau R et les sources S1, S2 sont disposées ainsi que précédemment.

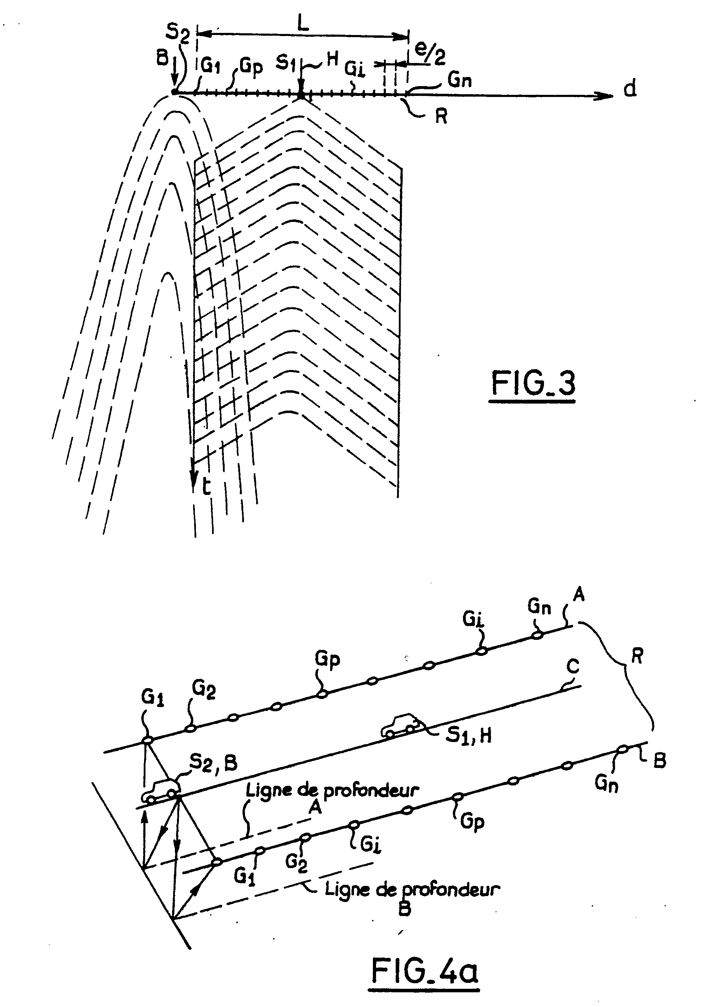

Une description plus détaillée des principes de fonctionnement du procédé d'acquisition de données sismiques objet de l'invention, dans le cas où deux sources notées S1, S2 sont utilisées, sera donnée en liaison avec la figure 3. En tout état de cause, le réseau R est réputé comporter au moins une ligne de récepteurs G1, G2, Gi, Gn régulièrement répartis dans la direction d'acquisition de trace ou de profil.

Conformément au procédé objet de l'invention celui-ci consiste à placer la première source notée S1, constituant source haute fréquence, c'est-à-dire source dont le spectre d'émission des composantes de vibration est situé dans la bande à fréquence haute, sensiblement au centre du réseau R.

La deuxième source constituant source à basse fréquence, c'est-à-dire dont le spectre des composantes de vibration est compris dans la bande à fréquence basse est ensuite disposée au voisinage de l'extrémité du réseau R.

Sur la figure 3, on a représenté dans un diagramme bidimensionnel temps t-distance d, les différentes formes d'amplitude d'écho relatif d'une part aux vibrations haute fréquence émise par la source S1 et aux vibrations basse fréquence émise par la source S2.

Ainsi qu'on peut le constater, les échos à basse fréquence et le bruit engendré par ces échos, suite à l'émission de la source basse fréquence S2, ces signaux d'écho étant des signaux à basse vitesse, sont décalés par rapport aux signaux d'écho des vibrations engendrées par la source S1 à haute fréquence, ces signaux d'écho haute fréquence étant des signaux d'écho à vitesse beaucoup plus élevée. De ce fait, le bruit basse fréquence inhérent à l'émission dans la bande basse fréquence de la source d'émission est sensiblement limité aux récepteurs G1, G2, Gp, situés en extrémité de réseau, l'ensemble des récepteurs correspondant à la zone centrale du réseau et à l'autre extrémité du réseau opposé à l'extrémité au voisinage de laquelle se trouve la source basse fréquence S2 étant exempt de bruit basse fréquence.

Ainsi, la quasi-totalité des récepteurs d'ordre supérieur à Gp permet d'obtenir des informations d'écho haute fréquence en l'absence quasi-totale de bruit à basse fréquence. Ces informations représentent les informations utiles susceptibles d'être exploitées en l'absence de bruit basse fréquence. Ainsi, bien que les récepteurs G1, Gp situés près de la source S2 basse fréquence restent soumis au problème de saturation par les signaux basse fréquence engendrés par la source S2, et voient ainsi leur dynamique limitée pour les signaux haute fréquence engendrés par la source S1, les capteurs d'ordre supérieur à Gp au voisinage du centre du réseau R et donc situés près de la source haute fréquence S1, restent les mieux adaptés à restituer le contenu haute fréquence des signaux d'écho.

Par cette disposition, les signaux haute fréquence d'écho peuvent être perçus bilatéralement par des récepteurs situés dans la zone centrale du réseau R, ce qui ne peut être le cas lorsqu'une source unique est placée en extrémité de réseau.

Ainsi qu'on le remarquera en outre sur la figure 3, la deuxième source S2, source basse fréquence peut être décalée en position vers l'extérieur du réseau par rapport à l'extrémité considérée.

Ainsi qu'on le remarquera en outre en figure 3, l'espacement entre récepteurs G1, G2, Gp, Gi, Gn, peut avantageusement être pris égal à e/2 où e représente l'espacement des récepteurs des procédés de l'art antérieur sur une ligne d'acquisition de trace alignée dans la direction d.

Ainsi, pour une même quantité de matériel en nombre de récepteurs que dans le cas de la mise en oeuvre de système d'acquisition de l'art antérieur, conformément au procédé objet de l'invention, la résolution spatiale du réseau R aux fréquences hautes, c'est-à-dire pour la source S1, est ainsi multipliée par deux, alors que la distance de la source S2, source basse fréquence, à l'extrémité opposée du réseau R, distance connue sous le vocable anglo-saxon de "remote-on" est inchangée et toujours égale à L.

Il est ainsi possible grâce au procédé objet de l'invention d'assurer la mise en oeuvre d'une acquisition de données sismiques avec un même effort de vibrations que dans le cas des dispositifs de l'art antérieur, le même effort de vibration étant ainsi obtenu en répartissant les durées et les nombres de vibrations par rapport à l'échantillonnage spatial.

Le procédé objet de l'invention permet ainsi d'élever la fréquence de coupure spatiale de la ligne d'émission en haute fréquence et dans certains cas de supprimer celle-ci sans réduire le nécessaire filtrage des bruits basse fréquence.

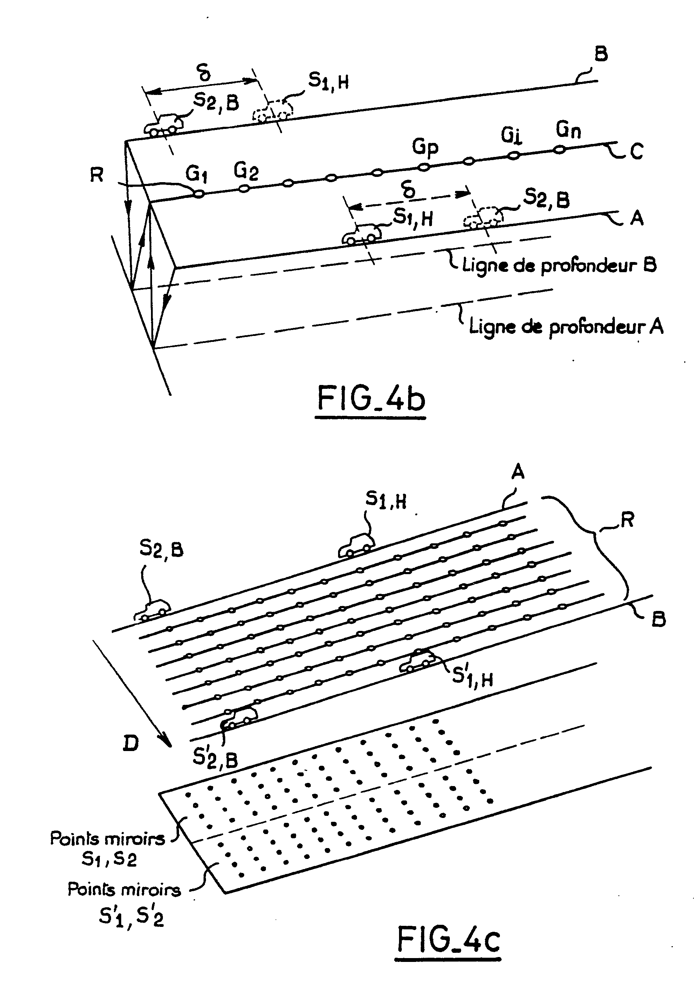

Le procédé objet de l'invention peut être mis en oeuvre dans différents modes d'acquisition, ainsi qu'il sera représenté maintenant en liaison avec les figures 4a, 4b, 4c.

Conformément à la figure 4a, dans le cas d'une acquisition multilignes bidimensionnelle, le réseau R comporte plusieurs alignements parallèles de récepteurs. Les sources de vibrations sont alors disposées sur une ligne parallèle. Les alignements parallèles de récepteurs sont disposés sur les lignes A et B et sur la ligne centrale C, de manière classique, les sources S1 et S2 sont représentées sur des véhicules mobiles afin de réaliser le déplacement relatif des sources par rapport au réseau R pour réaliser les figures d'émission. Le synchronisme des tirs ou de déclenchement des sources S1, S2, lesquelles sont constituées par des vibreurs ainsi qu'il sera décrit ultérieurement dans la description, est assuré de manière classique.

Au contraire, dans le cas d'une acquisition multisources bidimensionnelle, ainsi que représenté en figure 4b, le caractère multisources de l'acquisition étant conféré à celle-ci non pas compte tenu de la division des sources en fonction de la bande de fréquence de leur spectre d'émission mais au contraire compte tenu de l'utilisation de plusieurs sources dont les bandes de fréquence du spectre d'émission sont subdivisées ainsi que décrit précédemment, le réseau R comporte un alignement de récepteurs, l'alignement central C, et une première A et une deuxième B ligne parallèle de déplacement des sources.

Dans ce cas, la source dite haute fréquence S1 est placée sur la première ligne A et la deuxième source dite basse fréquence est placée sur la deuxième ligne, la ligne B. Dans ce cas, les première S1 et deuxième S2 sources sont alternées après chaque incrément de déplacement de trace, le long des première et deuxième lignes A et B. De cette manière et de façon schématique, après déplacement d'un incrément de trace δ de la source S1 et de la source S2, cette même source S1, respectivement S2, a été représentée en pointillé et désignée après déplacement S2, respectivement S1. Le passage d'une source de type première source, c'est-à-dire source haute fréquence à une source de deuxième type, c'est-à-dire une source basse fréquence est réalisé par le seul changement de la forme du signal de commande de ces dernières, ainsi qu'il sera décrit ultérieurement dans la description. L'émission des vibrations à l'aide de vibrations dont les composantes sont successivement haute fréquence puis basse fréquence sur une ligne A, B et respectivement est ainsi effectuée de manière entrelacée par rapport au réseau R.

Dans le cas d'une acquisition tridimensionnelle ainsi que représentée en figure 4c, le réseau R comporte une pluralité de lignes de récepteurs, les lignes étant disposées parallèlement dans une direction perpendiculaire à la direction de progression D. Dans ce cas, les sources à fréquence haute S1 et S'1 et les sources à fréquence basse S2 et S'2 sont alors disposées au voisinage du centre du réseau R et à l'extrémité de celui-ci respectivement sur deux lignes parallèles latérales A et B. Les tirs ou déclenchements des vibrations engendrés par les sources S1, S2, S'1, S'2 peuvent être effectués en synchronisme partiel, c'est-à-dire les sources S1, S2 étant tout d'abord déclenchées en synchronisme puis les sources S'1, S'2 on en synchronisme total, les sources S1, S'1 et S2, S'2 étant déclenchées simultanément. Dans ce dernier cas, un codage de polarité d'émission ou un codage de fréquence peut être effectué. Sur la figure 4c, on a également représenté les points miroirs S1, S2 et les points miroirs S'1, S'2 obtenus conformément au procédé objet de l'invention.

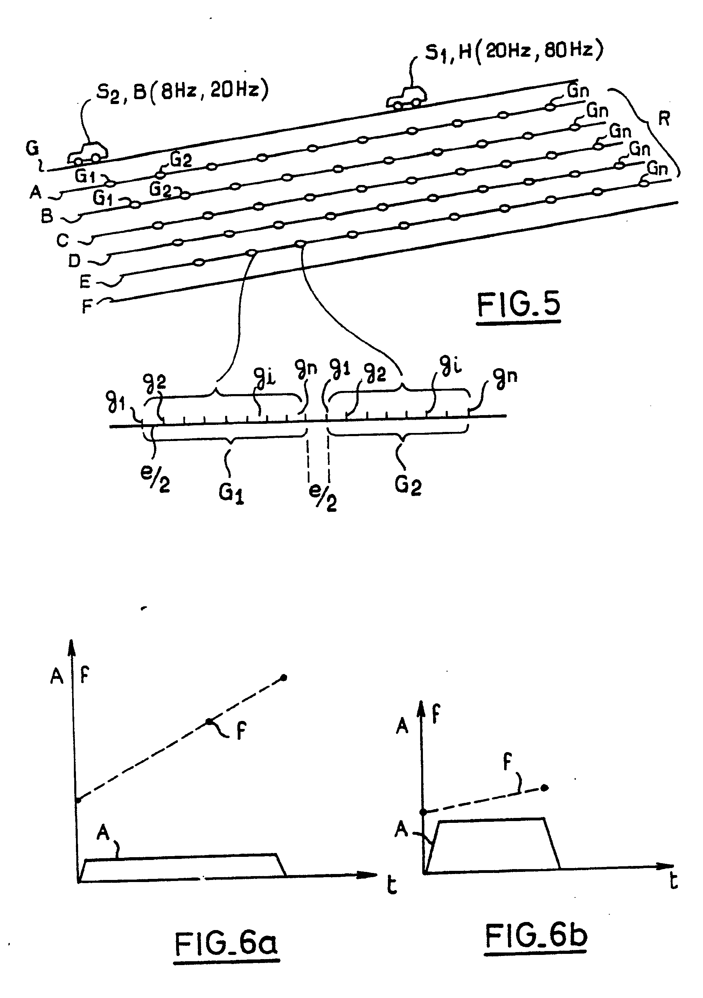

Un dispositif d'acquisition de données sismiques conforme à l'objet de l'invention, permettant la mise en oeuvre du procédé tel que précédemment décrit sera décrit en liaison avec la figure 5.

Ainsi que représenté sur la figure précitée, le dispositif d'acquisition de données sismiques selon l'invention, comporte disposé à l'aplomb de la surface terrestre dans la zone de prospection ZP, un réseau de récepteurs de vibrations, réseau noté R, et une pluralité de sources de vibrations S1, S2. Chacune des sources S1, S2 et susceptible d'émettre une vibration dont le spectre de fréquence est compris dans une bande de fréquence déterminée. Les bandes de fréquence de chaque source sont adjacentes et permettent de couvrir la bande de fréquence des signaux utiles des données sismiques.

Le réseau R de récepteurs peut avantageusement être monoligne ou multilignes.

La pluralité de sources comporte de préférence une première source notée S1, dite source haute fréquence susceptible d'émettre une vibration dont le spectre de fréquence est compris dans une bande de fréquence comprise entre 20 Hz et 80 Hz. La pluralité de sources comporte également une deuxième source dite source basse fréquence, susceptible d'émettre une vibration, dont le spectre de fréquence est compris dans une bande de fréquence comprise entre 8 Hz et 20 Hz.

De manière classique, chaque récepteur G1, G2, Gi, Gn, peut être constitué par un groupe de géophones interconnectés chaque géophone étant noté g1, g2 à gn. Ainsi qu'on l'a représenté en figure 5, chaque géophone g1, g2, gi, gn est distant l'un de l'autre de la distance e/2 par exemple, et chaque groupe de géophones constituant les récepteurs G1, G2 est également distant de la même distance e/2. Ainsi, le réseau R apparaît constitué de lignes de géophones équidistants, d'une distance égale à e/2. On notera que la distance e/2 peut être choisie en fonction des conditions d'utilisation du système d'acquisition de données objet de l'invention, cette distance pouvant par exemple être prise égale à 50 mètres pour une longueur L de distance de "remote-on" égale à 2,4 km. Bien entendu, les géophones g1, g2, gi, gn, constituant les récepteurs G1 à G, sont interconnectés de façon à constituer un récepteur soumis sensiblement au même écho de vibrations. La connexion des géophones précités est de type classique, ceux-ci pouvant être connectés en série ou en parallèle à l'une des voies de transmission d'un câble de transmission sismique conformément à la technique classique.

Une description plus détaillée des formes d'ondes des signaux de commande de la première, respectivement deuxième source de façon à engendrer des vibrations dont le spectre de fréquence est compris dans une bande de fréquence haute et dans une bande de fréquence basse sera donnée en liaison avec les figures 6a et 6b.

Sur les figures précitées, on a représenté respectivement en traits continus et en traits mixtes la forme d'onde en amplitude (A) en fonction du temps et la variation de la fréquence (f) d'émission de vibrations en fonction du temps, respectivement. Pour les deux sources, l'émission est effectuée à amplitude constante pendant une certaine durée qui peut être différente pour chaque source S1 et S2. La fréquence d'émission varie continuement dans la bande de fréquence correspondante.

On a ainsi décrit un procédé et un dispositif d'acquisition de données sismiques, particulièrement performant dans la mesure où une même quantité de matériel d'émission-réception de mise en oeuvre du procédé, celui-ci permet d'assurer la suppression des signaux de bruit en basse fréquence sans toutefois nécessiter de filtrage temporel visant à réduire le niveau de bruit précité et en l'absence de réduction correspondante de la bande de fréquence des signaux utiles dans le domaine des basses fréquences. Il est cependant nécessaire d'augmenter, doubler, le nombre de canaux de corrélation, une série de canaux pour les signaux basse fréquence et une série de canaux pour les signaux haute fréquence. En outre, ainsi qu'on l'a décrit précédemment, le procédé objet de l'invention permet d'augmenter la résolution spatiale de l'acquisition pour les signaux à fréquence haute sensiblement d'un facteur 2 sans diminuer la distance de remote-on, laquelle correspond à celle des réseaux de type classique.

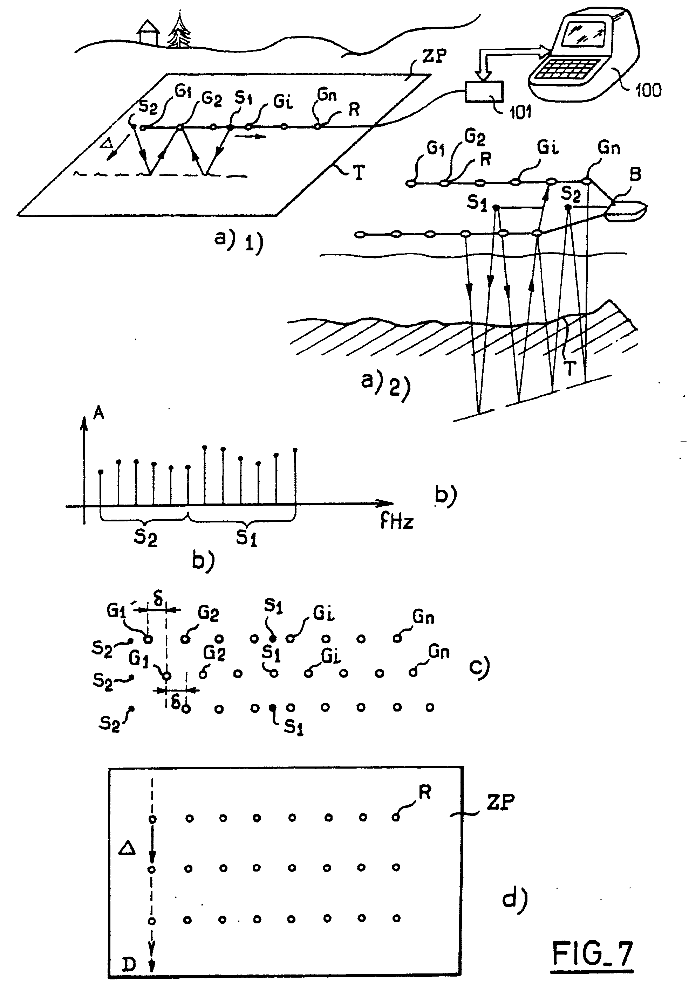

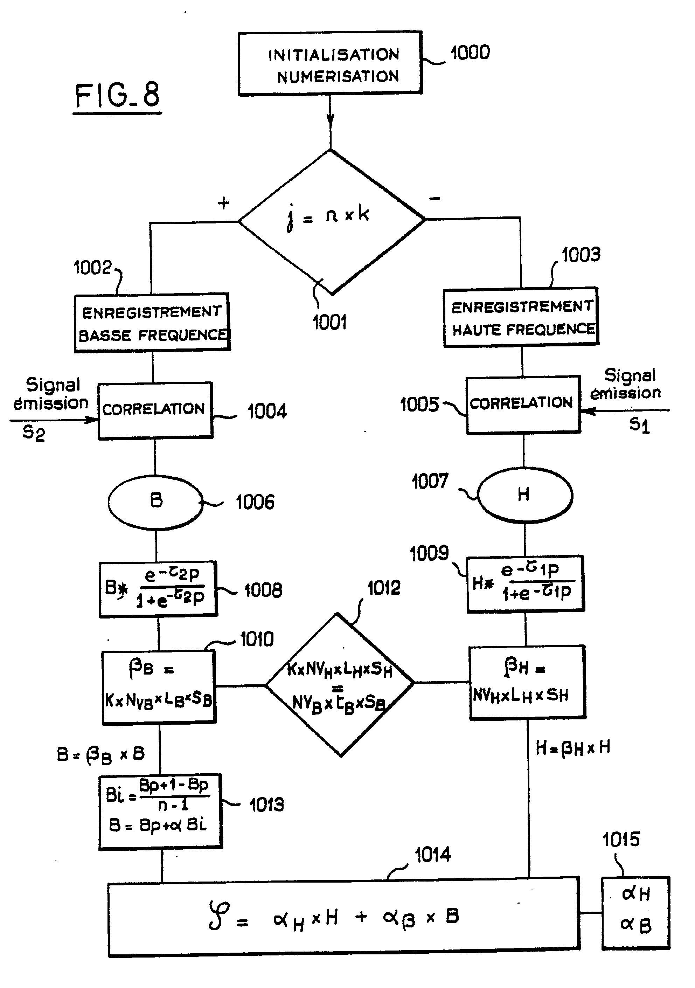

Un exemple de traitement des données acquises conformément au procédé, objet de l'invention, tel que précédemment décrit, sera donné en liaison avec les figures 7 et 8.

Afin d'assurer le traitement des données acquises précitées, le dispositif, objet de l'invention, comporte, ainsi que représenté en figure 7a), des moyens de saisie 101 et de traitement 100 sous forme numérisée des vibrations réfléchies selon leurs bandes de fréquence d'émission correspondantes. A titre d'exemple non limitatif, on comprendra que les moyens de saisie 101 peuvent être constitués par un système échantillonneur des groupes de géophones Gi, ce système échantillonneur étant bien entendu connecté à l'ensemble du réseau R représenté en figure 7a) au point 1 ou 2. Bien entendu, le système échantillonneur 101 est interconnecté à un calculateur de conduite de tir assurant le traitement des données numérisées et référencé 100. Le système échantillonneur 101 et le calculateur de conduite de tir 100 peuvent être constitués par des matériels de type connu mais permettant d'échantillonner à grande vitesse un nombre très important de signaux, les signaux délivrés par les groupes de géophones précités. Bien entendu, le calculateur de conduite de tir 100 est muni de ses éléments périphériques tels que d'un moniteur d'affichage, d'un clavier de commande et des mémoires auxiliaires par exemple.

L'exemple de traitement des données numérisées obtenues à partir du système échantillonneur 101 sera donné dans le cas de l'utilisation d'une première source S1 haute fréquence et d'une deuxième source S2 basse fréquence, étant bien entendu qu'un nombre quelconque de sources peut, normalement, être utilisé.

Dans le cas précité, les moyens de saisie et de traitement sous forme numérisée 100, 101 comportent, implantés en mémoire de travail des moyens calculateurs 100, ainsi que représenté en figure 8, un sous-programme 1000 d'initialisation et de numérisation, lequel permet la commande directe du système échantillonneur 101.

Au sous-programme d'initialisation et de numérisation 1000 sont associés également un sous-programme 1001 et un sous-programme 1002 permettant la commande d'enregistrement des vibrations réfléchies basse fréquence selon un échantillonnage spatial peu dense. Ainsi, une pluralité de géophones du réseau R distants de n × e, où e représente la distance entre deux géophones successifs, sont munis d'un filtre de réception dont la bande passante correspond sensiblement à la bande d'émission de la source basse fréquence S2. Les autres géophones distants de e et disposés dans le réseau R entre deux géophones d'échantillonnage peu dense sont munis d'un filtre de réception dont la bande passante correspond à la bande de fréquence d'émission de la source haute fréquence S1. On désigne, de manière qualitative, la fonction de transfert des deux catégories de filtres précités

$$(1) \qquad \frac{e^{-\tau 2 p}}{1+e^{-\tau 2 p}}$$

dans laquelle $\tau 2$ représente la constante de temps du filtre associé aux géophones assurant l'échantillonnage spatial peu dense et

$$(2) \qquad \frac{e^{-\tau 1 p}}{1+e^{-\tau 1 p}}$$

dans laquelle $\tau 1$ représente la constante de temps du filtre associé aux géophones assurant l'échantillonnage spatial plus dense.

Conformément aux sous-programmes 1001 et 1002, les géophones ou groupes de géophones, assurant l'échantillonnage spatial peu dense, sont commandés à l'enregistrement pour assurer l'enregistrement en 1002 des vibrations basse fréquence, les données numérisées correspondantes étant ainsi constituées en un fichier suite à l'étape 1002 précitée. On comprendra bien entendu que les données numérisées correspondantes sont alors enregistrées dans la mémoire de travail du calculateur de conduite de tir 100 à des adresses particulières déterminées lorsque l'adresse du géophone correspondant, adresse j, est égale à un multiple de n, le coefficient k représentant un entier compris entre un et une valeur déterminée donnée en fonction des dimensions et de la configuration du réseau.

Bien entendu, le calculateur de conduite de tir 100 comporte également, implanté en mémoire de travail, outre le sous-programme 1001 précité, un sous-programme 1003 d'enregistrement des vibrations réfléchies haute fréquence selon l'échantillonnage spatial dense précédemment défini. Dans ce cas, les géophones ou groupes de géophones commandés à l'enregistrement des vibrations haute fréquence sont distants de e, ainsi que précédemment décrit. Bien entendu, lorsque l'adresse j des données numérisées correspondantes délivrées par le système échantillonneur 101 n'est pas égale à un multiple entier de n, les données numérisées correspondantes sont alors mémorisées à l'étape 1003 pour constituer un fichier de données de vibrations réfléchies haute fréquence à l'étape 1003 représenté sur la figure 8.

Afin d'assurer la constitution de données plus directement utilisable par le système de traitement des données numérisées constituées par le calculateur 101, celui-ci comporte en outre, ainsi que représenté en figure 8, un premier sous-programme 1004 de corrélation des vibrations réfléchies à basse fréquence enregistré dans le fichier 1002 avec le signal d'émission de la source basse fréquence S2 pour engendrer une pluralité de données basse fréquence B, ces données corrélées étant constituées en un fichier 1006.

De la même façon, le calculateur de conduite de tir 101 comporte en mémoire de travail un sous-programme 1005 de corrélation des vibrations réfléchies à haute fréquence sous forme de données numérisées enregistrées dans le fichier 1003 avec le signal d'émission de la source haute fréquence S1 pour engendrer une pluralité de données haute fréquence corrélées, constituées en un fichier 1007. Les données corrélées P et H, constituées en leurs fichiers respectifs 1006 et 1007, peuvent alors être soumises à un traitement proprement dit en fonction de la nature des informations contenues par ces données. Les sous-programmes de corrélation consistent en des programmes de corrélation de type classique.

Dans ce but, les moyens 100 de saisie et de traitement sous forme numérisée, constitués par le calculateur de conduite de tir, comportent, implantés dans la mémoire de travail de celui-ci d'un sous-programme d'alignement des spectres de phase sous-programmes 1006 et 1007 de chacun des types de données corrélées basse fréquence B ou haute fréquence H. Ainsi que représenté schématiquement en figure 8, le sous-programme d'alignement des spectres de phase consiste essentiellement en un sous-programme permettant d'effectuer un produit de convolution des données basse fréquence B par un opérateur représentatif de la fonction de transfert numérisée du filtre basse fréquence correspondant, fonction de transfert telle que donnée par la relation 1 et, respectivement, des données corrélées haute fréquence H par un opérateur représentatif de la fonction de transfert du filtre associé correspondant haute fréquence. Sur la figure 8, l'astérisque représente le produit de convolution entre les données considérées et les opérateurs représentatifs des fonctions de transfert correspondantes.

En outre, ainsi qu'on l'a représenté en figure 8, le calculateur 100 de conduite de tir, constituant des moyens de saisie et de traitement sous forme numérisée des vibrations réfléchies, comporte un sous-programme en mémoire de travail d'alignement des spectres d'amplitude des données basse fréquence et haute fréquence. Sur la figure 8, les sous-programmes d'alignement des spectres d'amplitude sont notés respectivement 1010, 1011 et 1012. L'alignement des spectres d'amplitude permet d'effectuer une pondération des spectres d'amplitude des données haute fréquence H et basse fréquence B pour rétablir l'équilibre du spectre d'amplitude total sur l'échelle des fréquences.

La pondération précitée est effectuée en tenant compte du nombre de sources haute fréquence $NV_H$ et le nombre de sources basse fréquence $NV_B$, les longueurs d'émission effectives $L_B$ et $L_H$ des sources basse ou haute fréquence S1 et S2 par exemple et l'ordre des additions $S_H$ et $S_B$. Ainsi que représenté en figure 8, les sous-programmes 1010, 1011 et 1012 sont agencés de façon qu'un coefficient de correction K soit appliqué par le sous-programme 1012 au coefficient de pondération des amplitudes haute fréquence donné par la relation (3) :

$$\beta_H = NV_H \times L_H \times S_H$$

de façon que ce coefficient de correction K, le coefficient de pondération des amplitudes haute fréquence βH et le coefficient de pondération des amplitudes basse fréquence donné par la relation (4) :

$$\beta_B = NV_B \times L_B \times S_B$$

vérifient la relation (5)

$$K \times \beta_H = \beta_B.$$

Par longueur d'émission effective $L_B$ ou $L_H$ des sources basse ou haute fréquence, on entend selon la désignation habituelle dans la technique correspondante le temps d'émission de ces sources.

On comprendra que, de manière classique, les coefficient $\beta_H$ et $\beta_B$ étant calculés à partir des paramètres physiques du réseau, le sous-programme 1012 permet, par approximation successive, la détermination du coefficient de correction K pour assurer l'égalité mentionnée en figure 8 au niveau du sous-programme 1012 par une suite de tests successifs. Cette égalité étant vérifiée, les valeurs des coefficients de pondération des amplitudes basse fréquence $\beta_B$ et haute fréquence $\beta_H$ sont alors retenues et appliquées aux données basse fréquence B et haute fréquence H pour obtenir les nouvelles valeurs

$$B = \beta_B \times B$$

et

$$H = \beta_H \times H.$$

Bien entendu et de manière non limitative, on comprendra que le traitement d'alignement des spectres de phase et le traitement d'alignement des spectres d'amplitude, tels que représentés par les sous-programmes 1008 et 1009 respectivement 1010, 1011, 1012 de la figure 8, peuvent être intervertis, le sous-programme d'alignement des spectres de phase pouvant être effectué préalablement au traitement par le sous-programme d'alignement des spectres d'amplitude sans sortir du cadre de l'objet de la présente invention.

Suite aux traitements précités d'alignement des spectres de phase respectivement des spectres d'amplitude, ainsi que représenté en figure 8, un sous-programme d'alignement des échantillonnages spatiaux au niveau du réseau R est prévu, ce sous-programme étant noté 1013 et étant destiné à assurer un alignement en nombre des données représentatives des vibrations réfléchies basse fréquence par rapport aux données représentatives des vibrations réfléchies haute fréquence. En effet, suite aux traitements précités, on obtient en 1010 et 1011 respectivement n fois plus de données représentatives des traces haute fréquence H que de données représentatives des traces basse fréquence B. Dans ce but, les moyens calculateurs 100 comportent en leur mémoire de travail un sous-programme 1013 d'interpolation linéaire de n – 1 acquisitions ou données basse fréquence fictives interpolées $B_I$ entre deux acquisitions basse fréquence successives B. Cette interpolation permet de combiner la suite interpolée de données fictives $B_I$ avec les données correspondantes haute fréquence H.

A titre d'exemple non limitatif, les données interpolées $B_I$ peuvent être obtenues par interpolation linéaire selon la relation

$$B_I = \frac{B_{p+1} - B_p}{n - 1}$$

relation dans laquelle $B_{p+1} - B_p$ représente les données effectives enregistrées pour deux géophones ou groupes de géophones successifs distants de nxe. Dans ce cas, une donnée reconstituée B est obtenue à partir d'une donnée effectivement enregistrée au niveau d'un géophone ou groupes de géophones d'enregistrement basse fréquence $B_p$ par la relation :

$$B = B_p + \alpha \, B_I \text{ ou } \alpha \text{ indique l'ordre d'interpolation.}$$

Le signal utile représentatif de l'écho résultant dû aux vibrations haute fréquence et basse fréquence recombinées est obtenu au moyen d'un sous-programme 1014 de recombinaison par somme ou par somme pondérée des données haute fréquence H et basse fréquence B, ce programme étant implanté en mémoire de travail des moyens calculateurs 100. La récupération de l'information optimale φ = H + B est effectuée par addition de la suite des données basse fréquence B délivrées par le sous-programme 1013 et des données basse fréquence interpolées B$_l$ avec la suite des données haute fréquence H.

La combinaison ou recombinaison des données H et B par addition de la suite des données précitées peut avantageusement être effectuée selon une pondération des opérandes signaux basse fréquence B et signaux basse fréquence pondérés B$_l$ et signaux haute fréquence H. Le sous-programme de pondération permet préalablement à l'addition d'applications de coefficients multiplicateurs α$_H$, α$_B$, délivrés par exemple par une table de consultation 1015, ces coefficients multiplicateurs pouvant varier dans le temps et étant représentatifs de l'absorption différente par le milieu des vibrations réfléchies en fonction de la fréquence moyenne dans la bande de fréquence considérée. On comprendra bien entendu que la table de consultation 1015 peut être directement implantée en mémoire de travail des moyens calculateurs de conduite de tir 100, cette table de consultation pouvant être rafraîchie et modifiée en fonction des applications considérées.

Dans la description précédente, on a considéré que les programmes notamment étaient implantés directement en mémoire de travail des moyens calculateurs de conduite de tir 100. Il est bien entendu que, en outre, l'ensemble des programmes ou sous-programmes précités peut être implanté en mémoire morte ou même en mémoire de masse du calculateur précité sans sortir du cadre de l'objet de la présente invention.

Ainsi qu'on l'a déjà mentionné précédemment, le procédé et le dispositif objet de l'invention peuvent avantageusement être appliqués pour l'acquisition de données sismiques terrestre ou marine, l'acquisition et le traitement des signaux en sismique marine pouvant être adaptée en conséquence.

## Revendications

1. Procédé d'acquisition de données sismiques dans une zone de prospection, consistant pour l'acquisition d'une trace :

a) à disposer à l'aplomb de la surface terrestre, dans la zone de propection, un réseau de récepteurs de vibrations,

b) à disposer au voisinage dudit réseau une pluralité de sources de vibrations, chacune desdites sources étant susceptible d'émettre une vibration dont le spectre de fréquence est compris dans une bande de fréquence déterminée, les bandes de fréquence des spectres de chaque source étant adjacentes et permettant de couvrir la bande de fréquence des signaux utiles des données sismiques,

c) à émettre à partir de la pluralité de sources des vibrations à spectre de fréquence différent,

d) à enregistrer, au moyen desdits récepteurs, lesdites vibrations réfléchies par les couches sous-jacentes de la surface terrestre,

e) à déplacer d'un incrément de déplacement de trace lesdites sources par rapport au réseau dans la direction d'acquisition,

f) à répéter les étapes c), d) et e) pour une pluralité de déplacements d'un incrément de trace successifs.

2. Procédé selon la revendication 1, caractérisé en ce que l'émission des vibrations à spectre de fréquence différent à partir de la pluralité de sources est effectuée en synchronisme.

3. Procédé selon l'une des revendications 1 ou 2, caractérisé en ce que ledit réseau comportant au moins une ligne de récepteurs régulièrement répartis, ledit procédé consiste :

— à placer une première source, dite source haute fréquence, au centre dudit réseau,

— à placer une deuxième source, dite source basse fréquence, au voisinage de l'extrémité dudit réseau, les deux sources présentant des spectres de fréquence de vibration adjacents et étant spatialement décalées sensiblement d'une demi-longueur de réseau.

4. Procédé selon la revendication 3, caractérisé en ce que ladite deuxième source est décalée en position vers l'extérieur du réseau.

5. Procédé selon l'une des revendications 1 à 4, caractérisé en ce que, dans le cas d'une acquisition multiligne bidimensionnelle, ledit réseau comporte plusieurs alignements parallèles de récepteurs, lesdites sources de vibration étant disposées sur une ligne parallèle.

6. Procédé selon l'une des revendications 1 à 4, caractérisé en ce que dans le cas d'une acquisition multisource bidimensionnelle, ledit réseau comporte un alignement central de récepteurs et une première et une deuxième ligne parallèles de déplacement des sources.

7. Procédé selon la revendication 6, caractérisé en ce que ladite première source, dite source haute fréquence, est placée sur la première ligne et la deuxième source, dite basse fréquence est placée sur la deuxième ligne, les première et deuxième sources étant alternées après chaque incrément de déplacement de trace le long des première et deuxième lignes.

8. Procédé selon la revendication 5 ou 6, caractérisé en ce que, dans le cas d'une acquisition tridimensionnelle, ledit réseau comporte une pluralité de lignes de récepteurs disposées parallèlement dans une direction perpendiculaire à la direction de progression.

9. Procédé selon l'une des revendications précédentes, caractérisé en ce que en vue de couvrir tout ou partie de la zone de prospection (ZP), ledit procédé consiste à déplacer le réseau et les sources d'un incrément de déplacement (Δ) dans la direction de progression (D), le réseau et les sources étant disposées conformément à l'une des revendications précédentes.

10. Dispositif d'acquisition de données sismiques pour prospection géophysique, comportant, disposées à l'aplomb de la surface terrestre dans la zone de prospection :

— un réseau de récepteurs de vibrations,

— une pluralité de sources de vibrations, chacune desdites sources étant susceptible d'émettre une vibration dont le spectre de fréquence est compris dans une bande de fréquence déterminée, les bandes de fréquence de chaque source étant adjacentes et permettant de couvrir la bande de fréquence des signaux utiles des données sismiques.

11. Dispositif selon la revendication 10, caractérisé en ce que le réseau de récepteurs est monoligne ou multilignes.

12. Dispositif selon l'une des revendications 10 ou 11, caractérisé en ce que ladite pluralité de sources comporte :

— une première source, dite source haute fréquence, susceptible d'émettre une vibration dont le spectre de fréquence est compris dans une bande de fréquence comprise entre 20 Hz et 80 Hz,

— une deuxième source, dite source basse fréquence, susceptible d'émettre une vibration dont le spectre de fréquence est comprise entre 8 Hz et 20 Hz.

13. Dispositif selon l'une des revendications 10 à 12, caractérisé en ce que chaque récepteur est constitué par un groupe de géophones interconnectés, les groupes constituant un récepteur étant distants d'une distance e/2 donnée.

14. Dispositif selon l'une des revendications 10 à 13, caractérisé en ce qu'il comporte en outre des moyens de saisie (101) et de traitement (100) sous forme numérisée desdites vibrations réfléchies selon leurs bandes de fréquence d'émission correspondantes, lesdits moyens étant constitués par un calculateur (100) de conduite de tir et de traitement muni de ses éléments périphériques.

15. Dispositif selon la revendication 14, caractérisé en ce que, dans le cas de l'utilisation d'une première source (S1) haute fréquence et d'une deuxième source (S2) basse fréquence, lesdits moyens de saisie et de traitement sous forme numérisée comportent, implantés en mémoire de travail desdits moyens calculateurs (100) :

• un sous-programme de commande d'enregistrement (1001, 1002) des vibrations réfléchies basse fréquence selon un échantillonnage spatial peu dense, les géophones ou groupes de géophones commandés à l'enregistrement des vibrations basse fréquence étant distants de n × e où e représente la distance séparant deux groupes de géophones adjacents et n un entier quelconque déterminé,

• un sous-programme de commande d'enregistrement (1001, 1003) des vibrations réfléchies haute fréquence selon un échantillonnage spatial dense, les géophones ou groupes de géophones commandés à l'enregistrement des vibrations haute fréquence étant distants de e où e représente la distance séparant deux groupes de géophones adjacents,

• un sous-programme (1004) de corrélation desdites vibrations réfléchies à basse fréquence avec le signal d'émission de ladite source basse fréquence (S2) pour engendrer une pluralité de données basse fréquence B (1006),

• un sous-programme (1005) de corrélation desdites vibrations réfléchies à haute fréquence avec le signal d'émission de ladite source haute fréquence (S1) pour engendrer une pluralité de données haute fréquence H (1007).

16. Dispositif selon les revendications 14 et 15, caractérisé en ce que lesdits moyens (100) de saisie et de traitement sous forme numérisée comportent en outre, implantés en mémoire de travail desdits moyens calculateurs, un sous-programme (1006) (1007) d'alignement des spectres de phase de chacun des types de données basse fréquence B ou haute fréquence H.

17. Dispositif selon l'une des revendications 15 ou 16, caractérisé en ce que lesdits moyens (100) de saisie et de traitement sous forme numérisée comportent un sous-programme (1010, 1011) d'alignement des spectres d'amplitudes desdites données basse fréquence B et haute fréquence H, ledit alignement permettant d'effectuer une pondération des spectres d'amplitude des données haute fréquence H et basse fréquence B pour rétablir l'équilibre du spectre d'amplitude total sur l'échelle des fréquences.

18. Dispositif selon la revendication 17, caractérisé en ce que ladite pondération est effectuée en prenant en compte le nombre de sources haute fréquence ($NV_H$) et le nombre de sources basse fréquence ($NV_B$), les longueurs d'émission effectives ($L_B$) et ($L_H$) des sources basse fréquence S1 et S2 et l'ordre des additions $S_H$ et $S_B$, un coefficient de correction K étant appliqué (1012) au coefficient de pondération des amplitudes haute fréquence donné par :

$$B_H = NV_H \times L_H \times S_H$$

de façon que ce coefficient de correction K, le coefficient de pondération des amplitudes haute fréquence et le coefficient de pondération des amplitudes basse fréquence donné par

$$\beta_B = NV_B \times L_B \times S_B$$

vérifient la relation :

$$K \times \beta_H = \beta_B.$$

19. Dispositif selon l'une des revendications 15 ou 17, caractérisé en ce qu'il comporte en outre, implanté en mémoire de travail des moyens calculateurs (100), un sous-programme (1013) d'interpolation linéaire de n − 1 acquisitions de données basse fréquence fictives interpolées $B_I$ entre deux acquisitions basse fréquence successives $B_p$, de manière à pouvoir combiner la suite interpolée de donnée fictives interpolées $B_I$ avec les données correspondantes haute fréquence H.

20. Dispositif selon la revendication 19, caractérisé en ce qu'il comporte en outre, implanté en mémoire de travail des moyens calculateurs (100), un sous-programme (1014) de recombinaison par somme ou somme pondérée des données haute fréquence H et basse fréquence B, la récupération de l'information optimale H + B étant effectuée par addition de la suite des données basse fréquence B et basse fréquence interpolée $B_I$ avec la suite des données haute fréquence H.

21. Dispositif selon la revendication 20, caractérisé en ce que lesdits moyens calculateurs comportent en outre, implanté dans la mémoire de travail de ces derniers, un sous-programme de pondération (1014, 1015) des opérandes, signaux basse fréquence B, signaux basse fréquence pondérés $B_I$, signaux haute fréquence H, ledit sous-programme de pondération permettant préalablement à l'addition l'application de coefficients multiplicateurs ($\alpha_H$, $\alpha_B$) pouvant varier dans le temps et représentatifs de l'absorption différente par le milieu des vibrations réfléchies en fonction de leur fréquence moyenne dans la bande de fréquence considérée.

**Patentansprüche**

1. Verfahren zur Erfassung von seismographischen Daten in einer Erkundungszone, das für die Erfassung einer Linie darin besteht :

a) senkrecht zur Erdoberfläche in der Erkundungszone ein Netz von Vibrationsrezeptoren anzuordnen,

b) in der Nachbarschaft des Netzes eine Mehrzahl von Vibrationsquellen anzuordnen, wobei jede dieser Quellen geeignet ist, eine Vibration auszusenden, deren Frequenzspektrum in einem bestimmten Frequenzband liegt, wobei die Bänder der Frequenzspektren jeder Quelle aneinandergrenzen und erlauben, das Frequenzband von nützlichen Signalen für seismische Daten zu überdecken,

c) von der Mehrzahl von Quellen Vibrationen mit unterschiedlichem Frequenzspektrum auszusenden,

d) mittels der Rezeptoren die Vibrationen, die von darunterliegenden Schichten der Erdoberfläche reflektiert werden, aufzunehmen,

e) die Quellen um einen Linienverschiebungsabstand bezüglich des Netzes in der Erfassungsrichtung zu verschieben,

f) die Schritte c), d) und e) für eine Mehrzahl von sukzessiven Verschiebungen um einen Linienabstand zu wiederholen.

2. Verfahren nach Anspruch 1, dadurch gekennzeichnet, daß das Aussenden von Vibrationen mit verschiedenen Spektren von der Mehrzahl von Quellen synchron erfolgt.

3. Verfahren nach einem der Ansprüche 1 oder 2, dadurch gekennzeichnet, daß, während das Netz wenigstens eine Linie von regelmäßig verteilten Rezeptoren besitzt, das Verfahren darin besteht :

— eine erste Quelle, die sogenannte Hochfrequenzquelle, in der Mitte des Netzes anzuordnen,

— eine zweite Quelle, die sogenannte Niederfrequenzquelle, in der Nachbarschaft des Endes des Netzes anzuordnen, wobei die beiden Quellen aneinandergrenzende Vibrationsspektren besitzen und räumlich im wesentlichen um die halbe Länge des Netzes getrennt sind.

4. Verfahren nach Anspruch 3, dadurch gekennzeichnet, daß die zweite Quelle in der Stellung zum Äußeren des Netzes verschoben ist.

5. Verfahren nach einem der Ansprüche 1 bis 4, dadurch gekennzeichnet, daß das Netz mehrere, parallele Anordnungen von Rezeptoren besitzt, wobei die Vibrationsquellen auf einer parallelen Linie angeordnet sind.

6. Verfahren nach einem der Ansprüche 1 bis 4, dadurch gekennzeichnet, daß in dem Fall einer zweidimensionalen Erfassung mit vielen Quellen das Netz eine zentrale Ausrichtung der Rezeptoren und eine erste und zweite parallele Verschiebungslinie für die Quellen besitzt.

7. Verfahren nach Anspruch 6, dadurch gekennzeichnet, daß die erste Quelle, die sogenannte Hochfrequenzquelle, auf der ersten Linie und daß die zweite Quelle, die sogenannte Niederfrequenzquelle, auf der zweiten Linie angeordnet ist, wobei die erste und die zweite Quelle nach jeder Linienverschiebung entlang der ersten und zweiten Linien abgewechselt werden.

8. Verfahren nach einem der Ansprüche 5 oder 6, dadurch gekennzeichnet, daß in dem Fall einer dreidimensionalen Erfassung das Netz eine Mehrzahl von Rezeptorlinien besitzt, die parallel in einer Richtung senkrecht zu Fortschreitungsrichtung angeordnet sind.

9. Verfahren nach einem der vorhergehenden Ansprüche, dadurch gekennzeichnet, daß zum Bedecken einer ganzen Erkundungszone (ZP) oder eines Teils davon das Verfahren darin besteht, das Netz und die Quellen um einen Verschiebungswert (Δ) in einer Fortschreitungsrichtung (D) zu verschieben, wobei die Quellen entsprechend einem der vorhergehenden Ansprüche angeordnet sind.

10. Vorrichtung zur Erfassung von seismischen Daten zur geophysikalischen Erkundung, die senkrecht zur Erdoberfläche in der Erkundungszone angeordnet umfaßt :

— ein Netz von Vibrationsrezeptoren,

— eine Mehrzahl von Vibrationsquellen, wobei jede dieser Quellen geeignet ist, eine Vibration auszusenden, deren Frequenzspektrum in einem bestimmten Frequenz band liegt, wobei die Bänder der Frequenzspektren jeder Quelle aneinandergrenzen und erlauben, das Frequenzband von nützlichen Signalen für seismische Daten zu überdecken.

11. Vorrichtung nach Anspruch 10, dadurch gekennzeichnet, daß das Rezeptorennetz aus einer oder aus vielen Linien besteht.

12. Vorrichtung nach einem der Ansprüche 10 oder 11, dadurch gekennzeichnet, daß die Mehrzahl von Quellen umfaßt :

— eine erste Quelle, eine sogenannte Hochfrequenzquelle, die geeignet ist, eine Vibration auszusenden, deren Frequenzspektrum zwischen 20 Hz und 80 Hz liegt,

— eine zweite Quelle, eine sogenannte Niederfrequenzquelle, die geeignet ist, eine Vibration auszusenden, deren Frequenzspektrum zwischen 8 Hz und 20 Hz liegt.

13. Vorrichtung nach einem der Ansprüche 10 bis 12, dadurch gekennzeichnet, daß jeder Rezeptor aus einer Gruppe verbundener Geophone besteht, wobei die einen Rezeptor bildenden Gruppen um einen gegebenen Abstand e/2 entfernt sind.

14. Vorrichtung nach einem der Ansprüche 10 bis 13, dadurch gekennzeichnet, daß sie außerdem Vorrichtungen zum Erfassen (101) und zur Verarbeitung (100) in digitalisierter Form der Vibrationen, die entsprechend ihren Emissionsfrequenzbändern reflektiert werden, umfaßt, wobei die Vorrichtungen aus einem Computer (100) zum Durchführen von Schüssen und zur Verarbeitung mit seinen Peripheriegeräten besteht.

15. Vorrichtung nach Anspruch 14, dadurch gekennzeichnet, daß im Falle der Verwendung einer ersten Quelle (S1) mit hoher Frequenz und einer zweiten Quelle (S2) mit niedriger Frequenz die Vorrichtungen zum Erfassen und Verarbeiten in digitalisierter Form in einem Arbeitsspeicher der Computervorrichtung (100) umfassen :

• ein Unterprogramm zum Steuern der Aufnahme (1001, 1002) der reflektierten, niederfrequenten Vibrationen mit einer nicht sehr dichten Stichprobennahme, wobei die Geophone oder Gruppen von Geophonen, die zur Aufnahme der niederfrequenten Vibrationen gesteuert werden, mit Abständen von n × e verteilt sind, wobei e den Abstand darstellt, der zwei Gruppen von aneinandergrenzenden Geophonen trennt und n eine vorgegebene, beliebige ganze Zahl ist,

• ein Unterprogramm zum Steuern der Aufnahme (1001, 1003) der reflektierten, hochfrequenten Vibrationen mit einer dichten Stichprobennahme, wobei die Geophone oder Gruppen von Geophonen, die zur Aufnahme der hochfrequenten Vibrationen gesteuert werden, mit Abständen von e verteilt sind, wobei e den Abstand darstellt, der zwei Gruppen von aneinandergrenzenden Geophonen trennt,

• ein Unterprogramm (1004) zum Korrelieren der reflektierten, niederfrequenten Vibrationen mit dem Emissionssignal der niederfrequenten Quelle (S2), um eine Mehrzahl von Niederfrequenzdaten B (1006) zu erzeugen,

• ein Unterprogramm (1005) zum Korrelieren der reflektierten, hochfrequenten Vibrationen mit dem Emissionssignal der hochfrequenten Quelle (S1), um eine Mehrzahl von Hochfrequenzdaten H (1007) zu erzeugen.

16. Vorrichtung nach den Ansprüchen 14 und 15, dadurch gekennzeichnet, daß die Vorrichtungen (100) zum Erfassen und Verarbeiten in digitalisierter Form außerdem im Arbeitsspeicher der Computervorrichtungen ein Unterprogramm (1006) (1007) zum Ausrichten der Phasenspektren jedes Datentyps sowohl niedriger Frequenz B als auch hoher Frequenz H umfassen.

17. Vorrichtung nach einem der Ansprüche 15 oder 16, dadurch gekennzeichnet, daß die Vorrichtungen (100) zum Erfassen und Verarbeiten in digitalisierter Form ein Unterprogramm (1010, 1011) zum Ausrichten der Amplitudenspektren der Daten niederer Frequenz B und hoher Frequenz H aufweisen, wobei die Ausrichtung erlaubt, eine Gewichtung der Amplitudenspektren der Daten hoher Frequenz H und niederer Frequenz B durchzuführen, um das Gleichgewicht des Gesamtamplitudenspektrums auf dem Maßstab der Frequenzen wiederherzustellen.

18. Vorrichtung nach Anspruch 17, dadurch gekennzeichnet, daß die Gewichtung durchgeführt wird, indem die Anzahl der hochfrequenten Quellen $(NV_H)$ und die Anzahl der niederfrequenten Quellen $(NV_B)$, die effektiven Emissionslängen $(L_B)$ und $(L_H)$ der niederfrequenten Quellen S1 und S2 und die Ordnung der Additionen $S_H$ und $S_B$ berücksichtigt werden, wobei ein Korrekturkoeffizient K (1012) auf den Gewichtungskoeffizienten der hochfrequenten Amplituden, der gegeben ist durch :

$$\beta_B = NV_H \times L_H \times S_H$$

angewandt wird mit, so daß dieser Korrekturkoeffizient K, der Gewichtungskoeffizient der hochfrequenten Amplituden und der Gewichtungskoeffizient der niederfrequenten Amplituden, der gegeben ist durch:

$$\beta_B = NV_B \times L_B \times S_B$$

die Beziehung

$$K \times \beta_H = \beta_B$$

erfüllen.

19. Vorrichtung nach den Ansprüchen 15 oder 17, dadurch gekennzeichnet, daß sie außerdem im Arbeitsspeicher der Computervorrichtungen (100) ein Unterprogramm (1013) zur linearen Interpolation von n − 1 fiktiven, niederfrequenten Datenerfassungen $B_I$ aufweist, die zwischen zwei aufeinanderfolgenden, niederfrequenten Datenerfassungen $B_p$ so interpoliert werden, daß sie die interpolierte Folge von fiktiven, interpolierten Daten $B_I$ mit den entsprechenden Daten der hohen Frequenz H kombinieren können.

20. Vorrichtung nach Anspruch 19, dadurch gekennzeichnet, daß sie außerdem im Arbeitsspeicher der Computervorrichtungen (100) ein Unterprogramm (1014) zur Summenrekombination oder gewichteten Summenrekombination der Daten hoher Frequenz H und niedriger Frequenz B aufweist, wobei die Wiedergewinnung der optimalen Information H + B durch Addition der Folge von Daten niederer Frequenz B und niederer, interpolierter Frequenz $B_I$ mit der Folge von Daten hoher Frequenz H erreicht wird.

21. Vorrichtung nach Anspruch 20, dadurch gekennzeichnet, daß die Computervorrichtungen außerdem im Arbeitsspeicher der letzteren ein Gewichtungsunterprogramm (1014, 1015) für die Operanden, Signale niederer Frequenz B, gewichteten Signale niederer Frequenz Bi und Signale hoher Frequenz H aufweisen, wobei das Gewichtungsunterprogramm vor der Addition die Anwendung von Multiplikationskoeffizienten ($\alpha_H$, $\alpha_B$) erlaubt, die sich als Funktion der Zeit ändern können und die unterschiedliche Absorption der reflektierten Vibrationen durch die Umgebung als Funktion ihrer mittieren Frequenz in dem betrachteten Frequenzband darstellen.

## Claims

1. Method of acquiring seismic data in a prospecting area comprising, in order to establish a trace, the steps of :

   a) disposing on or over the terrrestrial surface in said prospecting area an array of vibration receivers ;

   b) disposing in the vicinity of said array a plurality of vibration sources each adapted to emit vibrations with a frequency spectrum in a specific frequency band, the frequency bands of the spectra of said sources being adjacent and together covering the frequency band of usable seismic data signals ;

   c) emitting vibrations with different frequency spectra from said plurality of sources ;

   d) recording said vibrations after reflection from strata beneath the terrestrial surface by means of said receivers ;

   e) moving said sources relative to said array in an acquisition direction by a trace displacement increment ; and

   f) repeating the above steps c), d) and e) for a plurality of successive movements by said trace displacement increment.

2. Method according to claim 1, wherein said vibrations with different frequency spectra are emitted synchronously.

3. Method according to claim 1, wherein said array includes at least one row of regularly spaced receivers and the method consists in :

   — placing a high-frequency first source at the center of said array ; and

   — placing a low-frequency second source near an end of said array, said first and second sources having adjacent vibration frequency spectra and being separated by a distance substantially equal to one half the length of said array.

4. Method according to claim 3, wherein said second source is offset towards the exterior of said array.

5. Method according to one of claims 1 to 4, where said array is adapted for two-dimensional multirow acquisition and comprises a plurality of parallel rows of receivers and said vibration sources are in a line parallel to said rows of receivers.

6. Method according to one of claims 1 to 4, wherein said array is adapted for two-dimensional multisource acquisition and comprises a central row of receivers and parallel first and second source displacement lines.

7. Method according to claim 6, wherein a high-frequency first source is placed on said first line and a low-frequency second source is placed on said second line and said first and second sources are alternated after each trace displacement increment movement along said first and second lines.

8. Method according to claim 5 or 6, wherein said array is adapted for three-dimensional acquisition and comprises a plurality of parallel rows of receivers perpendicular to the direction in which said sources are moved.

9. Method according to one of claims 1 to 8, wherein to cover all or part of said prospecting area (ZP) said array of receivers and said sources are moved by a displacement increment ($\Delta$) in a direction of advance (D).

10. Device for acquisition of seismic data in a prospecting area comprising on or over the terrestrial surface in said prospecting area :

— an array of vibration receivers ; and

— a plurality of vibration sources each adapted to emit vibrations with a frequency spectrum in a specific frequency band, the frequency bands of the spectra of said sources being adjacent and together covering the frequency band of usable seismic data signals.

11. Device according to claim 10, wherein said array comprises one or more rows of receivers.

12. Device according to claim 10 or 11, wherein said plurality of sources comprises :

— a high-frequency first source adapted to emit vibrations with a frequency spectrum in a frequency band between 20 Hz and 80 Hz ; and

— a low-frequency second source adapted to emit vibrations with a frequency spectrum between 8 Hz and 20 Hz.

13. Device according to one of claims 10 to 12, wherein each receiver comprises a set of interconnected geophones and said receivers are spaced by a specific distance.

14. Device according to one of claims 10 to 13, further comprising means for capturing (101) and processing (100) in digitized form said reflected vibrations according to their corresponding emission frequency bands, in the form of a fire control and processing computer (100) and associated peripheral devices.

15. Device according to claim 14, wherein said capture and processing means include a working memory of said computer and in said working memory :

— a subroutine (1001, 1002) commanding recording of the reflected low-frequency vibrations with relatively less dense spatial sampling whereby the geophones or groups of geophones commanded to record said low-frequency vibrations are separated by a distance $n \times e$ where $e$ represents the distance between two adjacent groups of geophones and $n$ is a specific integer,

— a subroutine (1001, 1003) for commanding recording of the reflected high-frequency vibrations with relatively more dense spatial sampling, the geophones or groups of geophones commanded to record said high-frequency vibrations being separated by said distance $e$,

— a subroutine (1004) for correlating said reflected low-frequency vibrations with the emission signal of said low-frequency source (S2) to generate a plurality of low-frequency data (1006) and

— a subroutine (1005) for correlating said reflected high-frequency vibrations with the emission signal of said high-frequency source (S1) to generate a plurality of high-frequency data (1007),

16. Device according to claims 14 and 15, wherein said capture and processing means (100) further comprise in said working memory of said computer a subroutine (1006, 1007) for aligning phase spectra of said low-frequency data and said high-frequency data.

17. Device according to claim 15 or 16, wherein said capture and processing means (100) further comprise a subroutine (1010, 1011) for aligning amplitude spectra of said low-frequency data and said high-frequency data to enable weighting of the amplitude spectra of said high-frequency data and said low-frequency data to re-establish the equilibrium of the total amplitude spectrum across the range of frequencies.

18. Device according to claim 17, wherein said weighting is applied allowing for the number $NV_H$ of high-frequency sources and the number $NV_B$ of low-frequency sources, the effective emission lengths $L_B$ and $L_H$ of the low-frequency and high-frequency sources, respectively, and the order of additions $S_H$ and $S_B$, a correction coefficient K being applied to the high-frequency amplitude weighting coefficient $\beta_H$ given by the equation :

$$\beta_H = NV_H \times L_H \times S_H$$

whereby said correction coefficient K, said high-frequency amplitude weighting coefficient $\beta_H$ and said low-frequency amplitude weighting coefficient $\beta_B$ given by the equation :

$$\beta_B = NV_B \times L_B \times S_B$$

satisfy the equation :

$$K \times \beta_H = \beta_B.$$

19. Device according to claim 15 or 17, further comprising in said working memory of said computer (100) a subroutine (1013) for linear interpolation of (n − 1) dummy low-frequency data acquisitions between two consecutive low-frequency acquisitions so as to be able to combine the interpolated stream of dummy data with the corresponding high-frequency data.

20. Device according to claim 19, further comprising in said working memory of said computer (100) a subroutine (1014) for combining by summing or weighted summing said high-frequency and said low-frequency data, the optimum low-frequency plus high-frequency information being recovered by adding the stream of low-frequency data and interpolated low-frequency data to the stream of high-frequency data.

21. Device according to claim 20, wherein said computer further comprises in said working memory a subroutine (1014, 1015) for weighting low-frequency signals, weighted low-frequency signals, high-frequency signals operands, said weighting subroutine enabling prior to said addition the application of multiplication coefficients ($\alpha_H$, $\alpha_B$) variable in time and representing different absorption by the environment of the reflected vibrations according to their mean frequency in the frequency band in question.

FIG. 1a

FIG. 1b

16

FIG. 2

## FIG.3

## FIG.4a

FIG.4b

FIG.4c

FIG.5

FIG.6a

FIG.6b

FIG. 7

FIG_8

INITIALISATION NUMERISATION — 1000

$j = n \times k$ — 1001

+ / −

1002 — ENREGISTREMENT BASSE FREQUENCE

1003 — ENREGISTREMENT HAUTE FREQUENCE

Signal émission $S_2$ → CORRELATION — 1004

1005 — CORRELATION ← Signal émission $S_1$

B — 1006

1007 — H

$B * \dfrac{e^{-\tau_2 p}}{1 + e^{-\tau_2 p}}$ — 1008

1009 — $H * \dfrac{e^{-\tau_1 p}}{1 + e^{-\tau_1 p}}$

1010 — $\beta_B = \dfrac{K \times N_{VB} \times L_B \times S_B}{}$

1012 — $\dfrac{K \times NV_H \times L_H \times S_H}{NV_B \times t_B \times S_B} =$

$\beta_H = \dfrac{}{NV_H \times L_H \times S_H}$

$B = \beta_B \times B$

$H = \beta_H \times H$

$B_i = \dfrac{B_{p+1} - B_p}{n - 1}$

$B = B_p + \alpha \, B_i$ — 1013

1014 — $\mathcal{S} = \alpha_H \times H + \alpha_B \times B$

1015 — $\alpha_H$ $\alpha_B$